Europäisches Patentamt

European Patent Office

Office européen des brevets

(19)

(11) Publication number: **0 034 501**
**A2**

## (12) EUROPEAN PATENT APPLICATION

(21) Application number: **81300662.4**

(22) Date of filing: **18.02.81**

(51) Int. Cl.³: **G 02 C 1/02**

(30) Priority: **18.02.80 JP 20568/80**

(43) Date of publication of application:
**26.08.81 Bulletin 81/34**

(84) Designated Contracting States:
**DE FR GB IT**

(71) Applicant: **Murakami, Mamoru**
**8-40, Murakuni 2 chome**
**Takefu Fukui(JP)**

(72) Inventor: **Murakami, Mamoru**
**8-40, Murakuni 2 chome**
**Takefu Fukui(JP)**

(74) Representative: **Palmer, Roger et al,**
**Page, White and Farrer 27 Chancery Lane**
**London WC2A 1NT(GB)**

(54) Spectacle or sunglass lens mounting.

(57) A method of fixing a spectacle lens to a spectacle frame is carried out such that an internally threaded hole (3) in a support member (2) for holding the spectace lens (4), which support member (2) is provided on the spectacle frame, is aligned in axial line with a hole (5) in the spectacle lens (4). A fastener (6) made of an elastomeric or other yieldable material, being conical (15) and tapered towards its tip (7), is threaded into the internally threaded hole (3) with an intermediate portion (11) extending through the hole (5) in the spectacle lens (4), so that the fastener (6) is threadably coupled to the internally threaded hole (3) to fix the spectacle lens to the spectacle frame.

FIG.8

EP 0 034 501 A2

FASTENER FOR FASTENING SPECTACLE OR SUNGLASS

LENS TO SPECTACLE OR SUNGLASS FRAME

AND FASTENING METHOD THEREFOR

This invention relates to a fastener for fastening a spectacle lens or a sunglass lens to a spectacle frame or a sunglass frame and a fastening method.

Heretofore, as one of methods for fastening a spectacle or sunglass lens (hereinafter referred to briefly as the 'spectacle lens') to a spectacle or sunglass frame (hereinafter referred to briefly as the 'spectacle frame'), there has been adopted such a method, in which support members for holding a spectacle lens each having an internally threaded hole are secured to portions of the spectacle frame, holes are formed at portions of the spectacle lens, the spectacle lens is superposed on the spectacle frame in such a manner that the axial lines of the former holes are aligned with the axial lines of the latter holes, separately provided metallic bolts are inserted through the holes and threadably coupled into the holes formed in the spectacles, thus fastening the spectacle lens to the spectacle frame.

However, with the conventional method as described above, in the case the axial lines of the holes formed in the spectacle lens are not accurately aligned with the axial lines of the holes formed in the spectacle frame, in fastening the spectacle lens to the spectacle frame by use of the metallic bolts, an excessive pressure that may be applied to the spectacle lens may cause unexpected damages to the spectacle lens. Particularly, in the case the spectacle frame is formed of a metallic rimless frame, the metallic rimless frame is deformed during polishing work or the like, the internally threaded holes in the metallic rimless frame are not aligned with the holes in the spectacle lens, thus increasing the possibility of causing damages to the spectacle lens.

Furthermore, in securing the spectacle lens to the spectacle frame, unless the tip end of the metallic bolt is accurately inserted into the internally threaded hole formed in the support member for holding the spectacle lens and threadably coupled thereinto, external threads formed on the tip end portion of the metallic bolt tend to be broken.

Additionally, in fixing the spectacle lens to the spectacle frame, it is difficult to correctly know the degree of tightening the metallic bolt because a tool such as a driver is used. An excessive degree of tightening tends to lead to breakage of the spectacle glass.

Furthermore, a groove or grooves are formed on the head of the metallic bolt for the application of the tool such as the driver thereto. Unless a tool accurately meeting this groove or grooves is used, at the time of threadably coupling the metallic bolt into the internally threaded hole, the groove or grooves formed on the head of the metallic bolt may be broken or the slip-off of the tool such as a driver may cause damages to the surface of the spectacle lens.

In any case, a skilled worker is required for carrying out this threadably coupling work.

With the spectacles or sunglasses in which the spectacle lens is fixed to the spectacle frame by the conventional method as described above, is a stress due to an external force is applied to the metallic spectacle frame, the stress is directly imparted from the support member for holding spectacle lens to the metallic bolt and further transmitted to the spectacle lens, whereby a breakage of the spectacle lens occurs at a point of contact between the metallic bolt and the spectacle lens. Furthermore, in this case, if the spectacle lens is of a glass material, pieces of broken glass generated by the breakage of the spectacle lens may plunge into an eye of a wearer of the spectacle or sunglasses which may lead to a loss of eyesight at the worst.

There are many people who appreciate that the spectacles or sunglasses in which the spectacle lenses are held by use of metallic bolts look rather cheapish even in the case of the design of the spectacles may be good.

One of the reasons for such appreciation of the people may be that the heads of the metallic bolts formed with the grooves nakely appear on the outer surface of such spectacle lenses.

The present invention has been developed to obviate the abovedescribed disadvantages of the prior art and has as its object the provision of a fastener for a spectacle lens to a spectacle frame, capable of safely securing a spectacle lens to a frame and safely holding the spectacle lens, and a fastening method.

According to the present invention there is provided a fastener for fastening a spectacle lens to a spectacle frame by being threadably coupled to an internally threaded hole formed in a support member for holding the spectacle lens, which support member is provided on said spectacle frame, characterised in that said fastener is formed of an elastomeric or other yieldable material as a whole.

Also according to the present invention there is provided a method a fixing a spectacle lens to a spectacle frame, wherein an internally threaded hole in a support member for holding the spectacle lens, which support member is provided on the spectacle frame, is aligned in axial line with a hole in the spectacle lens, characterised in that a fastener made of an elastomeric or other yieldable material, being conical and tapered toward a tip thereof is treaded into the internally threaded hole with an intermediate portion of said fastener extending through the hole in the spectacle lens so that said fastener is threadably coupled to the internally threaded hole to fix the spectacle lens to the spectacle frame.

The abovedescribed features and object of the present invention will become more apparent with reference to the following description, taken in conjunction with the accompanying drawings, wherein like reference numerals denote like elements, and in which:

Fig. 1 is a front view showing the spectacle frame secured thereto with the support member for holding the spectacle lens;

Fig. 2 is an enlarged perspective view showing the essential portions of the spectacle frame secured thereto with the support member provided therein with the internally threaded hole;

Fig. 3 is a front view showing the spectacle lens formed therein with holes;

Fig. 4 is a front view showing the spectacles or sunglasses holding spectacle lenses;

Fig. 5 is a plan view showing the fastener;

Fig. 6 is a.perspective view showing the fastener;

Fig. 7 is a bottom view showing the fastener;

Fig. 8 is a sectional view showing the state where the fastener is inserted into the hole formed in the spectacle lens and the internally threaded hole formed in the support member;

Fig. 9 is a perspective view showing the condition where the head portion of the fastener is threadably coupled by use of fingers;

Fig. 10 is a perspective view showing the condition where the fastener has been changed into an externally threaded bolt;

Fig. 11 is a sectional view of the essential portions showing the state where the seat face of the fastener is in contact with the surface of the spectacle lens;

Fig. 12 is a perspective view showing a piece of the tip end portion of the fastener which has been shorn off as an unnecessary portion;

Fig. 13 is a perspective view showing a piece of the head portion of the fastener which has been shorn off as an unnecessary part;

Fig. 14 is an enlarged sectional view of the essential portions showing an example of the completed combination of the components according to the present invention;

Fig. 15 is an enlarged sectional view of the essential portions showing another example of the completed combination of the components according to the present invention;

Fig. 16 is a front view showing another example of the fastener;

Figs. 17 and 18 are front views showing a further example of the fastener; and

Fig. 19 is a front view showing a fastener having a tapered intermediate portion.

Description will hereunder be given of embodiments with reference to the drawings.

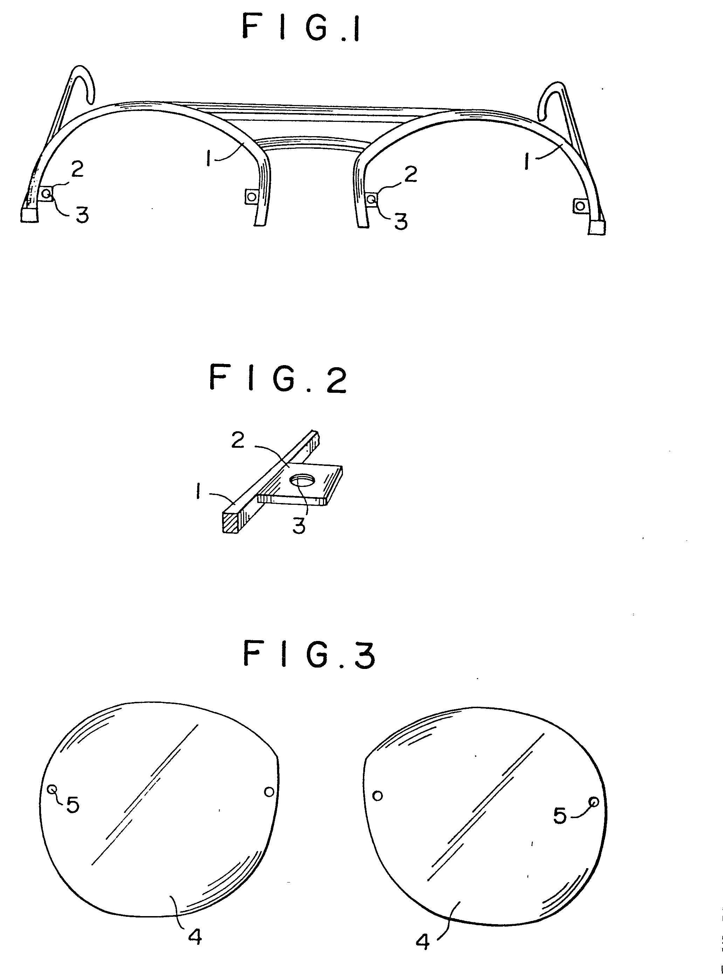

As shown in Figs. 1 and 2, a support member 2 for holding a spectacle lens having an internally threaded hole 3 is secured to a portion of a spectacle frame 1.

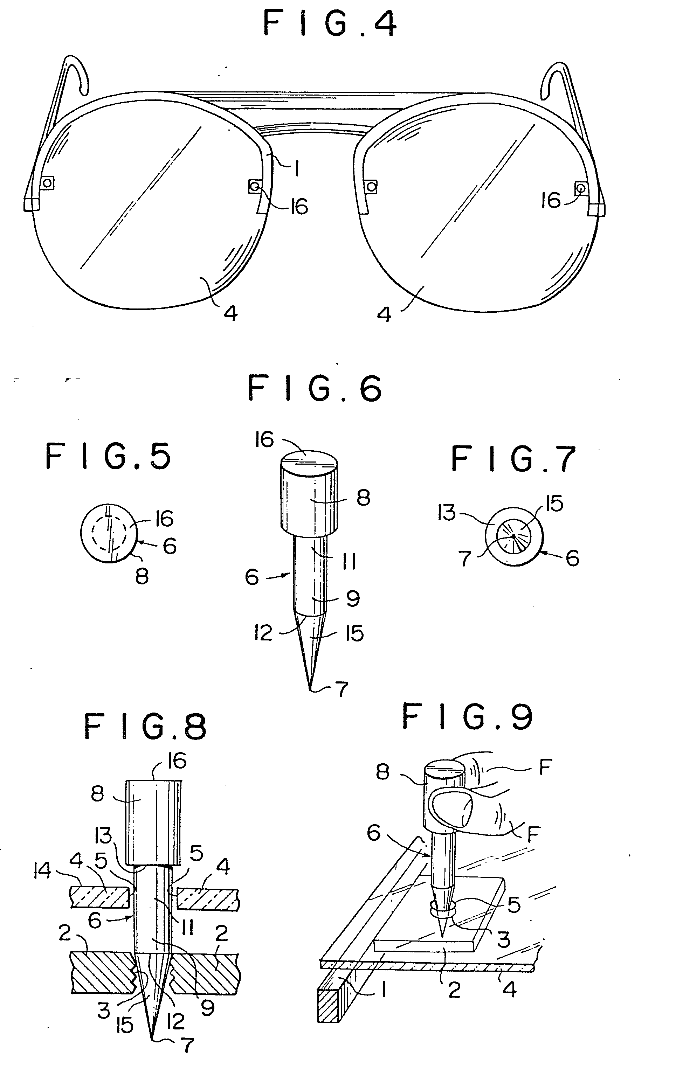

As shown in Fig. 3, holes 5 are formed in portions of the spectacle lens 4, and the spectacle frame 1 and the spectacle lens 4 are superposed on each other in such a manner that the holes 3 and 5 are aligned in their axial lines with each other as shown in Fig. 4.

Figs. 5 through 7 show a fastener 6 for holding the spectacle lens, which is made of a synthetic resin material.

This fastener 6 has a large-diameter columnar head portion 8, a small-diameter columnar intermediate portion 11 with a smooth surface 9, and a conical portion 15.

In a condition as shown in Fig. 8, the tip end 7 of the fastener 6 is inserted through the hole 5 formed in the spectacle lens 4, and further inserted into the internally threaded hole 3 formed in the support member 2 for holding the spectacle lens in the same condition as described above.

In addition, if the diameter of the intermediate portion 11 of the separately formed fastener 6 made of a synthetic resin material is formed such that the diameter is smaller than the size of the hole 5 of the spectacle lens 4 and larger than the size of the internally threaded hole 3 formed in the support member 2 for the spectacle lens, then a part 12 of the intermediate portion 11 of the fastener 6, which has been inserted through the hole 5 and further into the internally threaded hole 3, is blocked at the inlet of the internally threaded hole 3 and does not further advance.

Additionally, the entire head portion 8 of the fastener 6 is formed to be larger in size than the hole 5 of the spectacle lens 4.

A worker engaged in spectacle securing work, under a condition where the fastener 6 is blocked at the inlet of the internally threaded hole 3, pushes the fastener 6 into the internally threaded hole 3 by use of his fingers F, rotating the head portion 8 of the fastener 6 in the threaded direction of the internal threads in such a fashion that the fastener 6 is closely attached to and threadably moves into the internally threaded hole 3.

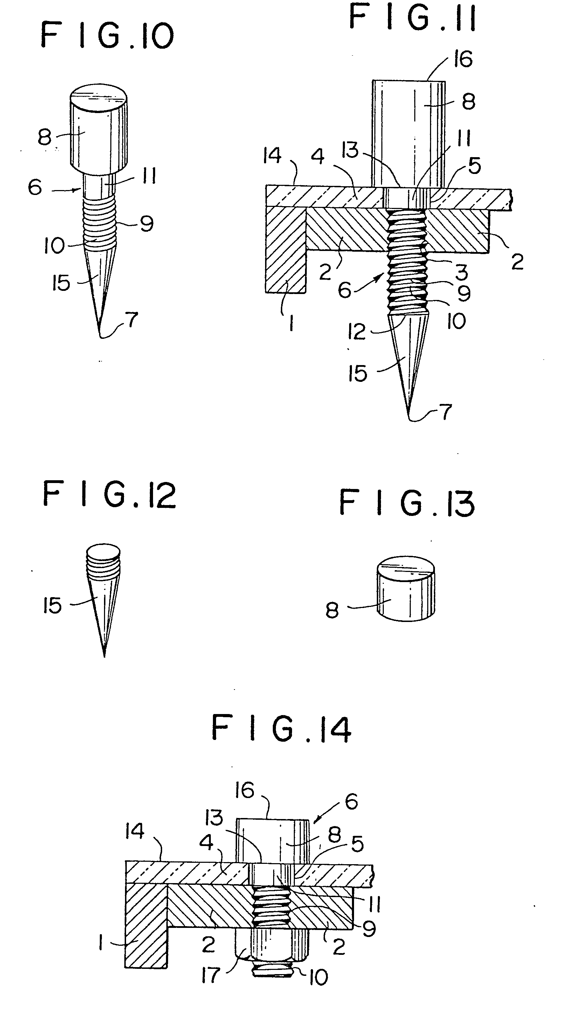

If this work is continued, then a surface 9 of the fastener 6 made of a synthetic resin material threadably moves into the internally threaded hole 3 formed in the support member 2 for holding the spectacle lens, while being closely attached thereto, whereby the fastener 6 is externally threaded, so that the fastener 6 can be turned into a bolt 10 made of a synthetic resin material and externally threaded bolt as shown in Fig. 10.

If this turning work is further continued, a seat face 13 of the head portion 8 of the fastener 6 comes into abutting contact with a surface 14 of the spectacle lens 4 as shown in Fig. 11.

At this time, the worker ascertains that the spectacle lens 4 is positively held on the spectacle frame 1, discriminates that the fastener 6 has been turned into the bolt 10 externally threaded, and shears off the unnecessary portion of the fastener 6, i.e., a conical portion 15 shown in Fig. 12 and a part of the head portion 8 for being turned by the use of fingers F as shown in Fig. 13, so that the spectacle lens 4 can be held on the support member 2 of the spectacle frame 1 as shown in Fig. 14.

As described above, the fastener 6 made of a synthetic resin material is turned into the bolt 10 which has been externally threaded by the utilization of the internally threaded hole 3 formed in the support member 2 secured to the spectacle frame 1, so that the spectacle lens 4 can be positively held on the spectacle frame 1.

The present invention has the arrangement as aforesaid, so that the disadvantages inherent to the holding of the spectacle lens by use of the metallic bolts can be obviated.

More specifically, in the method of holding the spectacle lens by use of the metallic bolts or construction therefor, in threadably coupling the metallic bolt, unless the tip end of the metallic bolt is correctly brought into abutting contact with the internally threaded hole 3, the external threads formed on the tip end portion of the metallic bolt tend to be damaged. Whereas, if the fastener 6 according to the present example is used, there would be no problem even if the fastener 6 might be tilted to an extent because the tip end portion of the fastener 6 is formed into the conical portion 15. Moreover, the hole 5 formed in the spectacle lens 4 can be readily aligned with the internally threaded hole 3 in their axial lines.

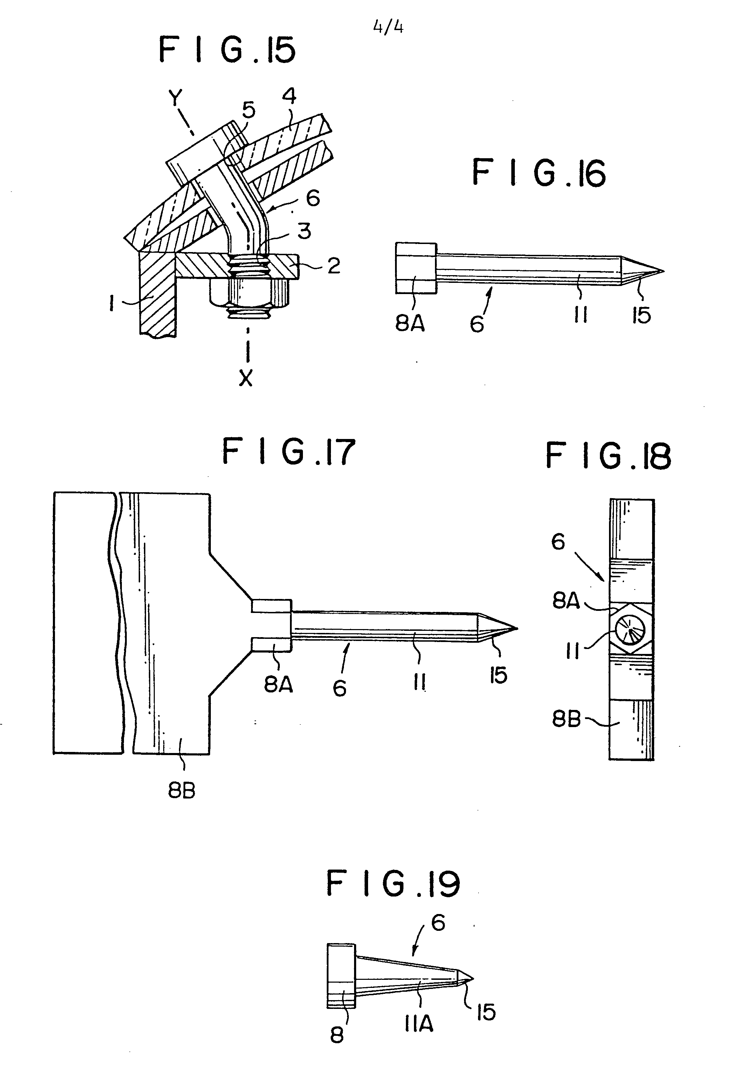

Since the fastener 6 is made of a synthetic resin material having an elasticity, even when the axial line X of the internally threaded hole 3 on the side of the spectacle frame 1 is not aligned with the axial line Y of the hole 5 formed in the spectacle lens 4 as shown in Fig. 15, the fastener 6 elastically bends with its shaft portion following the aforesaid axial lines X and Y, so that the spectacle lens 4 can be secured to the spectacle frame 1 and held thereon without being damaged.

Furthermore, troublesome handling of th tool such as the driver is required for threadably coupling the metallic bolt, whereas, according to the example the fingers F of the worker are directly used for the threadably coupling work, so that troublesome handling of the tool can be avoided.

Moreover, the threadably coupling work is carried out without using the tool such as the driver, so that the danger of damaging the spectacle lens with the tool can be eliminated and the spectacle lens securing work may be carried out even by an unskilled worker.

Particularly, in the case the spectacle frame 1 is made of a metallic material, even when a stress due to an external force is applied to the spectacle frame 1 made of a metallic material, the fastener 6 made of a synthetic resin material or the like according to the present example performs its function as a cushion, whereby the stress is not directly imparted to the spectacle lens 4, so that the spectacle lens 4 can be protected from unexpected damages. And, at the same time, with the spectacle lens 4 made of a glass material, the use of the fastener 6 according to the present example can minimize the possibilities that pieces of broken glass generated by the breakage of the glass spectacle lens plunge into an eye of a wearer of the spectacles or sunglasses.

After the spectacle lens 4 is positively held on the spectacle frame 1 by turning the fastener 6 made of a synthetic resin material into the externally threaded bolt 10, a part of the head portion 8 of the fastener 6, which is considered unnecessary, is cut off by use of a knife or the like, whereby a head face 16 having no grooves appears on the surface of the spectacle lens as shown in Fig. 4.

In the case this fastener 6 according to the present example is used with the spectacle lens 4 which has a color, if the fastener 6 is colored by the same color as that of the spectacle lens 4, then the head face 16 of the fastener 6 is not conspicuous in its outer appearance, and the effects of such presentation may contribute to increasing the value of the spectacles or sunglasses.

As necessary, the externally threaded intermediate portion 11 of the fastener may be left long after being shorn, and the intermediate portion 11 thus left long is tightened with a nut 17, thereby enabling to further increase a holding force for the spectacle lens.

According to the present example. it is possible that the surface of the fastener 6 coming into contact with the hole 5 of the spectacle lens 4 and the hole 3 of the support member 2 is attached to those holes with a bonding agent.

The fastener 6 according to the present example may include the following types.

a) a fastener made of a synthetic resin material,

b). a fastener made of rubber,

c) a fastener made of leather,

d) a fastener in which an elastomeric synthetic resin is coatingly bonded to the outer peripheral surface of the intermediate portion 11 thereof,

e) a fastener, the tip end portion of which is of a conical shape,

f) a fastener, the head portion 8 of which is formed with a groove or grooves,

g) a fastener, in which the intermediate portion 11 or the head portion 8A is of a prism shape as shown in Fig. 16,

h) a fastener, in which a finger grip 8B of a flat plate shape for being gripped by the fingers of a worker to facilitate the thread-in work is provided at the top of the head portion,

i) a fastener, in which the intermediate portion 11 thereof is provided at the outer peripheral surface thereof with axial grooves for smoothly discharging chips produced at the time of the thread-in work,

j) a fastener, in which the intermediate portion 11 thereof is previously provided at the outer peripheral surface thereof with external threads to be mated with the internally threaded hole 3 formed in the support member 2 of the spectacle frame 1,

k) a fastener, in which the intermediate portion 11 thereof is a conical shaft portion 11A being externally threadable by being threadably coupled with the internally threaded hole 3 formed in the support member 2 of the spectacle frame 1 as shown in Fig. 19, and

l) a fastener, in which the intermediate portion 11 thereof is a conical shaft portion previously provided thereon with external threads.

As has been described hereinabove, according to the present example the fastener for spectacles or sunglasses is formed of an elastomeric material as a whole, which can fasten the spectacle lens to the spectacle frame by being threadably coupled into the internally threaded hole formed in the support member for holding the spectacle lens, which is provided on the spectacle frame, so that the present invention can offer such an outstanding advantage that the spectacle lens is safely and positively secured to the spectacle frame.

Furthermore, the method of fixing the spectacle lens to the spectacle frame according to the present invention is carried out such that the internally threaded hole formed in the support member for holding the spectacle lens, which is provided on the spectacle frame, in aligned in axial line with the hole formed in the spectacle lens, a fastener made of an elastomeric material, being conical and tapered toward its tip end is threadably moved into the internally threaded hole with its intermediate portion being extended through the hole formed in the spectacle lens, and the fastener is threadably coupled to the internally threaded hole, whereby the spectacle lens is fixed to the spectacle frame, so that the present invention can offer such an outstanding advantage that the spectacle lens can be safely and positively secured to the spectacle frame and held thereon.

It should be apparent to one skilled in the art that the abovedescribed embodiments are merely illustrative of but a few of many possible specific embodiments of the present invention. Numerous and varied other arrangements can be readily devised by those skilled in the art without departing from the spirit and scope of the invention.

CLAIMS:

1. A fastener for fastening a spectacle lens to a spectacle frame by being threadably coupled to an internally threaded hole formed in a support member for holding the spectacle lens, which support member is provided on said spectacle frame, characterised in that said fastener (6) is formed of an elastomeric or other yieldable material as a whole.

2. A method of fixing a spectacle lens to a spectacle frame, wherein an internally threaded hole in a support member for holding the spectacle lens, which support member is provided on the spectacle frame, is aligned in axial line with a hole in the spectacle lens, characterised in that a fastener (6) made of an elastomeric or other yieldable material, being conical (15) and tapered toward a tip (7) thereof, is threaded into the internally threaded hole (3) with an intermediate portion of said fastener (6) extending through the hole (5) in the spectacle lens (4) so that said fastener (6) is threadably coupled to the internally threaded hole (3) to fix the spectacle lens (4) to the spectacle frame (1).

3. A method of fixing a spectacle lens to a spectacle frame according to claim 2, characterised in that said fastener is formed of a synthethic resin material.

# F I G . 1

# F I G . 2

# F I G . 3

FIG.4

FIG.6

FIG.5

FIG.7

FIG.8

FIG.9

FIG.10

FIG.11

FIG.12

FIG.13

FIG.14

# F I G .15

# F I G .16

# F I G .17

# F I G .18

# F I G .19